# FASCICULE DE BREVET EUROPEEN

(11) **EP 2 230 975 B1**
(45) Date de publication et mention de la délivrance du brevet: **15.05.2019**
(21) Numéro de dépôt: 08871970.3
(22) Date de dépôt: 14.11.2008
(51) Int. Cl.: A47J 37/12, B62B 1/26

(54) **TRANSBORDEUR EQUIPE D'AU MOINS UN SYSTEME DE POMPAGE COOPERANT AVEC AU MOINS UN CONTENEUR AMOVIBLE**
ÜBERTRAGUNGS-FÖRDERBAND, DAS MINDESTENS EIN PUMPSYSTEM ENTHALT, DAS MIT MINDESTENS EINEM ENTFERNBAREN BEHÄLTER INTERAGIERT
TRANSFER CONVEYOR INCLUDING AT LEAST ONE PUMPING SYSTEM INTERACTING WITH AT LEAST ONE REMOVABLE CONTAINER

(30) Priorité: 15.11.2007 FR 0708015
(43) Date de publication de la demande: 29.09.2010
(73) Titulaire: MERIM SERVICES, 36800 Saint Gaultier (FR)
(72) Inventeur: MULLERIS, Jean-Jacques, F-92200 Neuilly sur Seine (FR)
(74) Mandataire: Debay, Yves
(86) Numéro de dépôt international: PCT/FR2008/001604
(87) Numéro de publication internationale: WO 2009/095565

(56) Documents cités:
- DE-A1- 10 164 511
- FR-A- 708 076
- FR-A- 783 825
- US-A- 4 614 350
- US-A- 5 340 471
- US-A- 5 494 191

## Description

La présente invention concerne un transbordeur équipé d'au moins un système de pompage coopérant avec au moins un conteneur amovible pour réaliser des opérations de transport et de transvasement de liquides alimentaires, en particulier, de l'huile alimentaire fraîche ou usagée.

Pour transporter des liquides alimentaires usagés depuis leur lieu d'utilisation jusqu'au conteneur de stockage, il est connu d'utiliser un transbordeur constitué d'un récipient mobile monté sur deux roues et un point d'appui. Le transbordeur est muni d'une ouverture de remplissage que l'on positionne sous l'orifice d'évacuation du dispositif de cuisson, par exemple, un bac de friteuse, pour recueillir l'huile usagée. Une fois le dispositif vidangé ou lorsque le transbordeur est plein, ce transbordeur est alors déplacé jusqu'au conteneur de stockage dans lequel son contenu est vidé par l'intermédiaire d'un tuyau de vidange et d'une pompe manuelle ou motorisée.

Un transbordeur connu est divulgué par US 5 494 191 A1.

Le document FR 2 827 590 propose un transbordeur destiné en particulier au transport entre un lieu ou dispositif d'utilisation et un lieu de stockage ou d'évacuation d'huiles, matières grasses ou liquides alimentaires, par exemple des huiles de friture. Le transbordeur pour liquides alimentaires usagés comprend au moins un conteneur mobile muni d'au moins une ouverture de remplissage et d'au moins une conduite de vidange, caractérisé en ce que l'ouverture de remplissage comporte des moyens de connexion étanches aptes à coopérer avec des moyens de fermeture, pour éviter les épanchements de liquide lors des secousses de transport, y compris à la température maximale du liquide alimentaire.

Ce type de technologie étudié pour être tout terrain est destiné au transvasement, par le dessous du dispositif de cuisson, du liquide alimentaire usagé dans le conteneur monté fixement au transbordeur, et au pompage du liquide alimentaire usagé du conteneur vers le dispositif de stockage. La vidange du dispositif de cuisson peut entraîner des risques d'éclaboussures pour l'opérateur si le transbordeur n'a pas été positionné correctement. Par ailleurs, ce type de transbordeur n'est pas adaptable à tout type de dispositif de cuisson et cela pose problème lors des changements de modèles des dispositifs de cuisson. En outre, le transbordeur est constitué de matériaux métalliques pouvant entraîner des risques de brûlure par contact des opérateurs avec les parois.

La présente invention a pour but de pallier un ou plusieurs inconvénients de l'art antérieur et propose un transbordeur équipé d'au moins un système de pompage coopérant avec au moins un conteneur amovible permettant d'assurer, de façon simple et en toute sécurité, des opérations de transport et de transvasement de liquides alimentaires frais et/ou usagés.

La présente invention concerne un transbordeur selon la revendication 1 et son utilisation selon la revendication 9.

Selon une particularité, le dispositif de maintien d'au moins un conteneur amovible est une plaque support montée fixement à la partie inférieure de la structure du transbordeur et le dispositif de suspension d'un conteneur amovible est monté fixement à la partie supérieure de la structure du transbordeur et constitué d'un système de griffes destiné à s'insérer dans un système d'accroche prévu sur le conteneur amovible pour charger et décharger le conteneur amovible pour le poser ou respectivement l'enlever du dispositif de maintien associé.

Selon une autre particularité, le système de pompage est réversible, de type manuel ou électrique ou thermique ou pneumatique, le système de pompage de liquide alimentaire frais étant distinct du système de pompage de liquide alimentaire usagé.

Selon une autre particularité, la canne de pompage d'un système de pompage destiné à transvaser un liquide alimentaire usagé d'un dispositif de cuisson dans le conteneur amovible est équipée à son extrémité en contact avec le liquide alimentaire usagé :
- d'un système de sécurité thermique pour empêcher la réalisation des opérations de transvasement de liquide alimentaire usagé du dispositif de cuisson vers le conteneur amovible, au-dessus d'un seuil réglementé de température du liquide alimentaire usagé ; et/ou
- d'un système de mesure de température pour fournir une information représentative de la température du liquide alimentaire du dispositif de cuisson à un opérateur, au moyen d'un dispositif d'affichage ; et/ou
- d'un système de filtrage pour éviter l'introduction de déchets solides indésirables dans le conteneur amovible et venant ou non du dispositif de cuisson ; et/ou
- d'un système d'obturation pour éviter l'écoulement sur le sol des résidus de liquide alimentaire se trouvant dans la canne de pompage lorsque les opérations de transvasement sont terminées.

Selon une autre particularité, le système de mesure de température est à contact direct ou non et le système de filtrage est réglé en fonction de la granulométrie des déchets solides acceptés dans le liquide alimentaire usagé à vidanger.

Selon une autre particularité, la canne de pompage d'un système de pompage destiné à transvaser un liquide alimentaire frais provenant d'un conteneur amovible dans un dispositif de cuisson est équipée à son extrémité en contact avec le liquide alimentaire frais :
- d'un système d'obturation pour éviter l'écoulement sur le sol des résidus de liquide alimentaire se trouvant dans la canne de pompage lorsque les opérations de transvasement sont terminées ; et/ou
- d'un clapet anti-retour pour éviter de polluer un liquide alimentaire frais du conteneur amovible avec un liquide alimentaire usagé lorsque l'opérateur effectue un complément de liquide alimentaire frais dans son dispositif de cuisson.

Selon une autre particularité, la première conduite est flexible et la deuxième conduite est rigide ou flexible et est munie ou non d'un système de connexion rapide anti-débordement à l'extrémité en contact avec un orifice de remplissage ou de vidange du conteneur amovible.

Selon une autre particularité, la structure du transbordeur est prévue pour être démontable ou pliable pour réduire l'encombrement et faciliter le rangement du transbordeur lorsqu'il n'y a pas lieu de l'utiliser.

Selon une autre particularité, le ou les conteneur(s) amovible(s) comprennent une structure fermée de forme géométrique caractéristique et de volume prédéterminé et au moins une poche disposée à l'intérieur de ladite structure et apte à recevoir un liquide alimentaire par au moins un orifice de la poche, ledit orifice de la poche correspondant avec au moins un orifice de la structure et étant apte à recevoir un système de fermeture de la poche, la géométrie et le matériau constitutif de la structure permettant de réaliser le montage par pliage de la structure et l'utilisation par dépliage de la structure afin de réduire l'encombrement de stockage du conteneur et de gerber une pluralité de conteneurs.

Un autre but est atteint en proposant une utilisation du transbordeur caractérisée en ce que le transbordeur muni d'au moins un système de pompage coopérant avec au moins un conteneur amovible est utilisé pour :
- transporter au moins un conteneur amovible, entre un lieu de stockage de conteneurs amovibles de liquide alimentaire usagé, un lieu de stockage de conteneurs amovibles de liquide alimentaire frais, un lieu de stockage de liquide alimentaire usagé et un lieu de stockage de liquide alimentaire frais ;
- vidanger, au moyen d'un système de pompage un liquide alimentaire usagé provenant d'un dispositif de cuisson soit dans un conteneur amovible ou une poche d'un conteneur bi-poche amovible ;
- dans le cas du transport au lieu de stockage du liquide alimentaire usagé, remplir, au moyen du même système de pompage, un dispositif de stockage de liquide alimentaire usagé avec le liquide alimentaire usagé provenant desdits conteneurs amovibles ;
- remplir, au moyen d'un autre système de pompage, dans le cas où le transbordeur est muni au moins de deux systèmes de pompage, un dispositif de cuisson avec un liquide alimentaire frais provenant soit d'un autre conteneur amovible ou d'une autre poche du conteneur bi-poche amovible ;
- dans le cas du transport au lieu de stockage du liquide alimentaire frais, vidanger, au moyen de l'autre système de pompage, le liquide alimentaire frais provenant d'un dispositif de stockage de liquide alimentaire frais soit dans le conteneur mono-poche amovible ou dans la deuxième poche du conteneur bi-poche amovible.

Selon une autre particularité, pour réaliser des opérations de transvasement de liquide alimentaire frais ou usagé, un opérateur connecte une extrémité de la deuxième conduite dont l'autre extrémité est reliée au système de pompage correspondant à l'orifice de remplissage ou de vidange du conteneur amovible puis plonge l'extrémité de la canne de pompage correspondante dans le dispositif de cuisson ou dans le dispositif de stockage de liquide alimentaire usagé ou encore dans le dispositif de stockage de liquide alimentaire frais en fonction de l'opération à réaliser, et actionne le système de pompage correspondant, dans le sens souhaité.

Selon une autre particularité, le transbordeur muni d'au moins un système de pompage et d'une plaque support destinée à recevoir au moins un conteneur amovible est apte, par un basculement du transbordeur, à charger un conteneur amovible se situant au sol sur le transbordeur et à décharger le conteneur amovible du transbordeur pour l'amener au sol sans avoir à se baisser.

Selon une autre particularité, le transbordeur muni d'au moins un système de pompage et du dispositif de suspension permet à un opérateur de charger un conteneur amovible se situant au sol sur le transbordeur et de décharger le conteneur amovible du transbordeur pour l'amener au sol sans avoir à se baisser.

Selon une autre particularité, le chargement du conteneur amovible se situant au sol sur le transbordeur consiste à amener le conteneur amovible sur la partie inférieure de la structure du transbordeur en disposant le transbordeur à proximité du conteneur disposé au sol, puis en inclinant le transbordeur au moyen de la partie supérieure de la structure de façon à ce que le système de griffes du dispositif de suspension vienne s'insérer dans un système d'accroche prévu sur le conteneur amovible et en redressant le transbordeur de façon à ce que le système de roues revienne en contact avec le sol.

Selon une autre particularité, le déchargement du conteneur amovible du transbordeur au sol consiste à incliner le transbordeur au moyen de la partie supérieure de la structure de façon à ce que le conteneur amovible soit déposé au sol et décrocher le système de griffes du système d'accroche prévu sur le conteneur amovible puis redresser le transbordeur de façon à ce que le système de roues revienne en contact avec le sol.

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :
- la figure 1 représente un transbordeur muni d'un système de pompage relié à une canne de pompage et destiné à recevoir au moins un conteneur amovible : les figures 1a, 1b représentant des vues en perspective, la figure 1c représentant une vue de face et la figure 1d représentant une vue de côté ;
- la figure 2 représente des vues en perspectives d'un transbordeur muni de deux systèmes de pompage reliés respectivement à une canne de pompage et destiné à recevoir au moins un conteneur amovible ;
- la figure 3 représente des vues en perspective (figures 3a et 3b) d'un transbordeur muni d'un système de pompage relié à une canne de pompage, coopérant avec un conteneur amovible ;
- la figure 4 représente des vues en perspective (figures 4a et 4b) d'un transbordeur muni de deux systèmes de pompage reliés respectivement à une canne de pompage, coopérant avec un conteneur amovible ;
- la figure 5 représente une vue en perspective (figure 5a) et une vue de côté (figure 5b) d'un transbordeur muni de deux systèmes de pompage reliés respectivement à une canne de pompage, coopérant avec deux conteneurs amovibles empilés l'un sur l'autre ;
- la figure 6 représente une vue de face (figure 6a) et une vue en perspective (figure 6b) d'un transbordeur muni d'un système de maintien et suspension d'un conteneur amovible ;
- la figure 7 représente une opération de chargement d'un conteneur amovible sur un transbordeur muni d'un système de maintien et suspension de conteneur amovible.

L'invention va à présent être décrite en référence aux figures précédemment citées.

Le transbordeur (1) équipé d'au moins un système de pompage (2, 2a, 2b) est constitué d'une structure mécanique (10) montée fixement sur un système de roues (11). La structure mécanique (10) en forme de chariot est constituée d'une partie inférieure (102) montée sur le dessous sur le système de roues (11) et sur le dessus, destinée à recevoir au moins un conteneur amovible (3, 3a, 3b) et d'une partie supérieure (101) permettant à un opérateur de manoeuvrer le transbordeur (1).

De façon avantageuse, la partie supérieure (101) est en forme d'arceau, à hauteur d'homme et solidaire de la structure (10) pour permettre à un opérateur de déplacer le transbordeur (1) sans se baisser.

De façon à assurer un équilibre stable en permanence et à pouvoir immobiliser le transbordeur (1) en toute sécurité, par exemple et de manière non limitative, lors des opérations de transvasement de liquide alimentaire, le système de roues (11) est constitué de 2, 3 ou 4 roues omnidirectionnelles ou unidirectionnelles et pouvant être munies d'un système de freinage (110) de type connu.

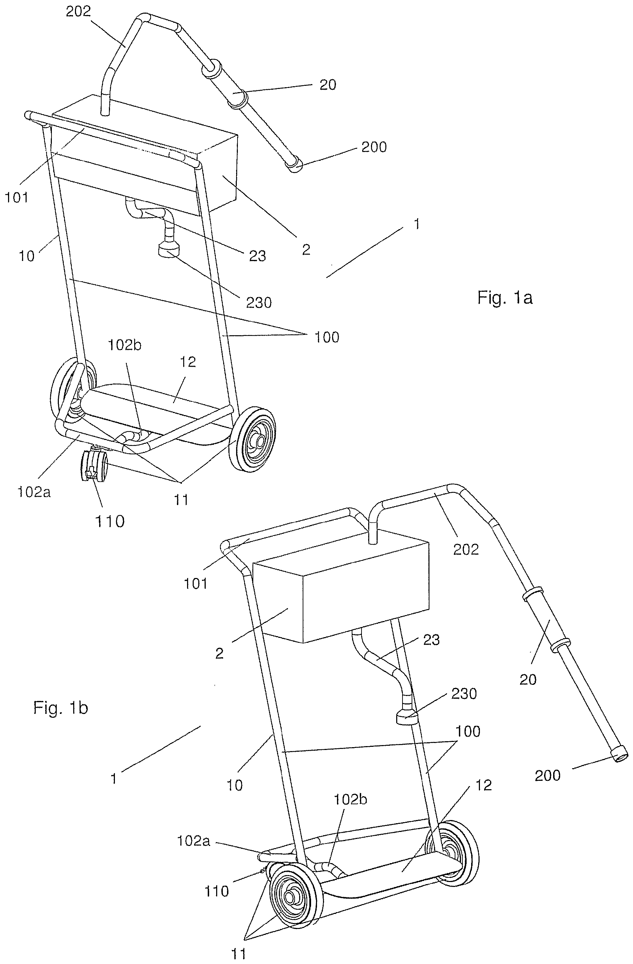

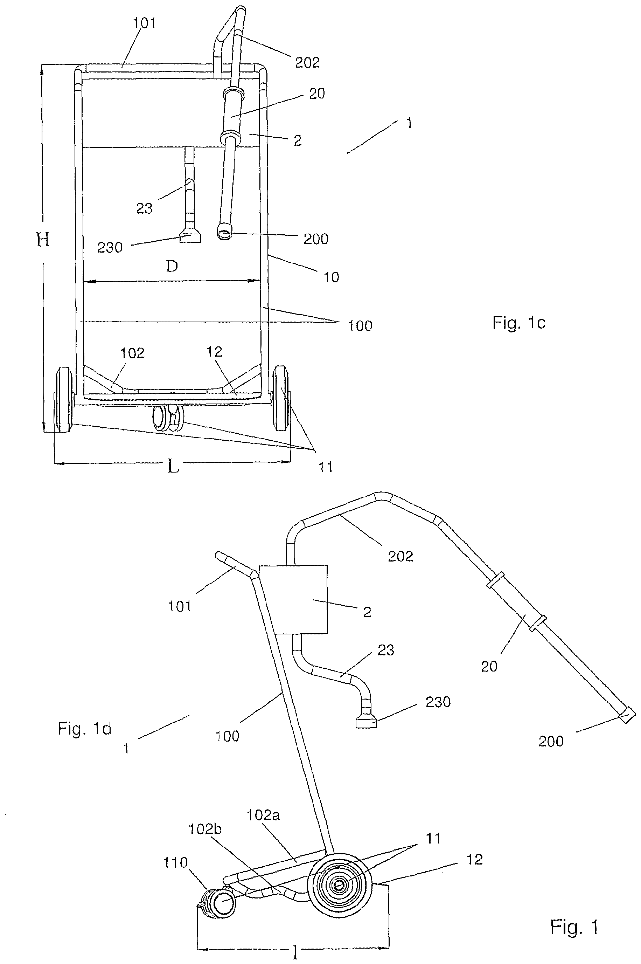

Dans un mode de réalisation préféré illustré aux figures 1 à 5, la structure mécanique (10) du transbordeur (1) est constituée de deux éléments parallèles (100) dont l'extrémité inférieure est fixée respectivement à une roue (11) de façon à ce que l'axe des roues (11) soit perpendiculaire aux éléments parallèles (100). L'autre extrémité, l'extrémité supérieure des éléments parallèles (100) est fixée à un premier arceau pour former la partie supérieure (101) du transbordeur (1). Une plaque support (12), constituant un dispositif de maintien pour au moins un conteneur amovible (3, 3a, 3b), de longueur sensiblement égale à la distance (D) séparant les deux éléments parallèles (100) est également fixée à l'extrémité inférieure des éléments parallèles (100) et perpendiculairement aux éléments parallèles (100) de façon à maintenir le parallélisme des éléments (100) et assurer une certaine rigidité de le structure (10) du transbordeur (1). A proximité de l'extrémité inférieure des éléments parallèles (100) est fixé un second arceau (102a) maintenu en son centre par l'extrémité d'un élément courbé (102b) dont l'autre extrémité est fixée sous et sensiblement au centre de la plaque support (12). Le second arceau (102a) et l'élément courbé (102b) forme la partie inférieure (102) de la structure (10) du transbordeur (1). La courbure de l'élément (102b) est adaptée et étudiée en fonction de la géométrie du conteneur amovible (3, 3a, 3b). La partie inférieure (102) de la structure (10) du transbordeur (1) est également étudiée et adaptée pour que le centre de gravité du conteneur amovible (3, 3a, 3b) s'équilibre sur le transbordeur (1) de façon à ce que l'opérateur n'est pas d'action à mener pour vaincre le poids du ou des conteneur(s) amovible(s) (3, 3a, 3b) lors de leur transport. Une troisième roue (11) munie d'un système de freinage (110) est fixée sensiblement au centre du second arceau (102a).

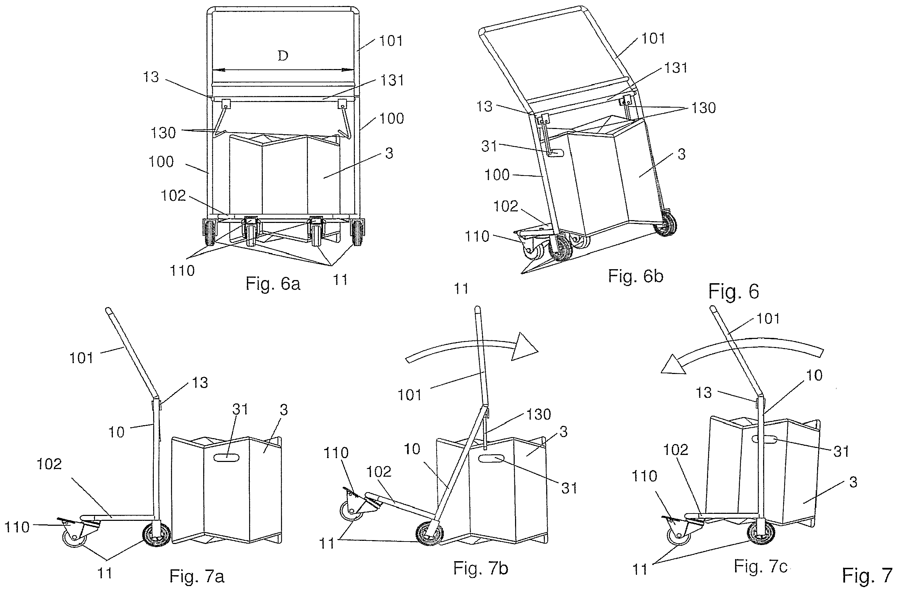

Dans une variante de réalisation représentée à la figure 6, la structure mécanique (10) est constituée des deux éléments parallèles (100) dont l'extrémité inférieure des éléments parallèles (100) est fixée respectivement à une roue (11) de façon à ce que l'axe des roues (11) soit perpendiculaire aux éléments parallèles (100). L'autre extrémité, l'extrémité supérieure des éléments parallèles (100) est fixée au premier arceau formant la partie supérieure (101) de la structure (10). A proximité de l'extrémité inférieure des éléments parallèles (100) est fixé le second arceau formant la partie inférieure (102) de la structure (10) et sur laquelle sont fixées de façon équidistante une ou deux roues (11) munies d'un système de freinage (110) afin d'immobiliser le transbordeur (1) et permettre à un opérateur d'utiliser le transbordeur (1) en toute sécurité. En outre, la structure (10) du transbordeur (1) est équipée d'un dispositif de suspension (13) d'un conteneur amovible (3) pour charger et décharger un conteneur amovible (3) associé avec le dispositif de maintien (12) décrit précédemment. Le dispositif de suspension (13) est monté fixement à la partie supérieure (101) de la structure (10) et est constitué d'un élément rigide (131), de longueur sensiblement égale à la distance (D) séparant les deux éléments parallèles (100) de la structure (10), fixé de façon perpendiculaire à proximité de l'extrémité supérieure des deux éléments parallèles (100), et d'un système de griffes (130), par exemple et de manière non limitative, une paire de griffes (130) fixées chacune perpendiculairement à une extrémité de l'élément rigide (131). Ce système de griffes (130) est destiné à s'insérer dans des poignées (31) ou tout autres systèmes d'accroche prévus sur le conteneur amovible (3) pour charger et décharger le conteneur amovible (3) pour le poser ou respectivement l'enlever du dispositif de maintien (12) associé.

De façon avantageuse, le dispositif de suspension (13) prévu sur le transbordeur (1) selon la variante de réalisation permet de réaliser des opérations de chargement et déchargement d'un conteneur amovible (3) sans qu'un opérateur n'ait à se baisser. Ces opérations de chargement et déchargement seront décrites dans la suite de la description.

De façon avantageuse, le transbordeur (1) présente une taille minimisée de manière à faciliter son passage dans des endroits exigus ou dans des montes charges. Dans un exemple de réalisation représenté aux figures 1c et 1d, la structure (10) du transbordeur (1) monté sur son système de roues (11) présente une hauteur (H) sensiblement égale à 910 millimètres, une longueur (L) sensiblement égale à 580 millimètres et une largeur (I) sensiblement égale à 470 millimètres.

De façon avantageuse, la structure (10) du transbordeur (1) est prévue pour être démontable ou pliable pour réduire l'encombrement et faciliter le rangement du transbordeur (1) lorsqu'il n'y a pas lieu de l'utiliser.

En outre, le transbordeur (1) est muni d'au moins un système de pompage (2, 2a, 2b) distinct et réversible, c'est-à-dire soit apte à fonctionner alternativement en pompage de liquide alimentaire frais et en injection de liquide alimentaire frais soit apte à fonctionner alternativement en pompage de liquide alimentaire usagé et en injection de liquide alimentaire usagé. Le ou les systèmes de pompage (2, 2a, 2b) sont fixés à la structure (10) à proximité de la partie supérieure (101) de la structure (10) précédemment décrite. Les systèmes de pompage (2, 2a, 2b) distincts correspondent à des circuits de pompage distincts, par exemple et de manière non limitative, un unique moteur avec autant de cellules de pompage que de systèmes de pompage. Par exemple et de manière non limitative, deux systèmes de pompages (2a, 2b) distincts correspondent à un seul moteur avec deux cellules de pompage, une cellule pour recevoir le liquide alimentaire frais et une autre cellule pour recevoir le liquide alimentaire usagé. En aucun cas, un système de pompage de liquide alimentaire usagé ne servira pour pomper un liquide alimentaire frais et réciproquement.

Chaque système de pompage (2, 2a, 2b) est relié de façon étanche à une canne de pompage (20, 20a, 20b) par une première conduite flexible (202, 202a, 202b) et reliable de façon étanche à un conteneur amovible (3) par une deuxième conduite rigide ou flexible (23, 23a, 23b). L'extrémité de la deuxième conduite (23, 23a, 23b) munie ou non d'un système de connexion rapide anti-débordement (230, 230a, 230b) est mise en contact avec un orifice de remplissage ou de vidange du conteneur amovible (3, 3a, 3b), selon les utilisations du transbordeur (1) qui seront décrites dans la suite de la description.

Le système de connexion rapide anti-débordement (230, 230a, 230b) permet un montage ou un démontage facile et rapide de la deuxième conduite (23, 23a, 23b) avec un orifice de remplissage ou de vidange du conteneur amovible (3, 3a, 3b). Ce système de connexion rapide anti-débordement (230, 230a, 230b) est composé en outre de clapets d'obturation aseptiques fournissant une étanchéité et d'un système de sécurité permettant d'éviter des déconnexions accidentelles entre la deuxième conduite (23, 23a, 23b) et l'orifice de remplissage ou de vidange du conteneur amovible (3, 3a, 3b).

La canne de pompage (20, 20a) d'un système de pompage (2, 2a) destiné à vidanger un liquide alimentaire usagé provenant d'un dispositif de cuisson dans le conteneur amovible (3, 3a, 3b) est équipé, à l'extrémité (200, 200a) en contact avec le liquide alimentaire usagé du dispositif de cuisson, d'un système de sécurité thermique de type mécanique, par exemple et de manière non limitative en alliage à mémoire de forme ou de type électrique, par exemple et de manière non limitative, à bilame pour empêcher la réalisation des opérations de vidange de liquide alimentaire usagé du dispositif de cuisson vers le conteneur amovible (3, 3a, 3b) au-dessus d'un seuil réglementé de température du liquide alimentaire usagé. Le système de sécurité thermique de type mécanique est, par exemple et de manière non limitative, un clapet d'obturation avec déclencheur par métaux en alliage à mémoire de forme ou en matériau fusible. Le système de sécurité thermique de type électrique est, par exemple et de manière non limitative, un bilame de commande d'interrupteur de pompe.

De façon avantageuse, ce système de sécurité thermique permet d'empêcher les manipulations de liquide alimentaire usagé à haute température pouvant provoquer des risques de brûlures aux opérateurs. En effet, si l'opérateur actionne son système de pompage (2, 2a) pour vidanger un liquide alimentaire usagé à haute température, le système de sécurité thermique est actionné de façon à empêcher la réalisation de la vidange. Lorsque le système de sécurité thermique a été actionné, le système de sécurité thermique est réarmé soit automatiquement soit manuellement avec ou sans changement des éléments de sécurité active pour permettre à nouveau de réaliser des opérations de transvasement avec cette même canne de pompage.

L'extrémité (200, 200a) de la canne de pompage (20, 20a) en contact avec le liquide alimentaire usagé du dispositif de cuisson est équipée d'un système de mesure de température pour fournir une information représentative de la température du liquide alimentaire du dispositif de cuisson à un opérateur. De façon avantageuse, le système de mesure de température permet d'informer de façon simple l'opérateur, par exemple au moyen d'un dispositif d'affichage sur la canne de pompage (20, 20a) de la température du liquide alimentaire usagé à vidanger et ainsi de la possibilité ou non de vidanger le liquide alimentaire usagé. Ce système de mesure de température est de toutes les natures communes de prises des températures à contact direct ou non, par exemple et de manière non limitative, une sonde de température ou une mesure par infrarouge à distance.

De façon à éviter l'introduction de déchets solides indésirables dans le conteneur amovible (3) et venant ou non du dispositif de cuisson, l'extrémité (200, 200a) de la canne de pompage (20, 20a) est équipée d'un système de filtrage laissant passer les liquides et retenant les solides plus grands qu'une dimension donnée. En effet, le système de filtrage est réglé en fonction de la granulométrie des déchets solides acceptés dans le liquide alimentaire usagé à vidanger.

De façon à éviter l'écoulement sur le sol des résidus de liquide alimentaire se trouvant dans la canne de pompage (20, 20a) lorsque les opérations de transvasement sont terminées, l'extrémité (200, 200a) de la canne de pompage (20, 20a) en contact avec le liquide alimentaire usagé est équipée, par exemple et de manière non limitative, d'un système d'obturation.

La canne de pompage (20b) d'un système de pompage (2b) destiné à transvaser un liquide alimentaire frais provenant d'un conteneur amovible (3, 3b) dans un dispositif de cuisson est équipée à son extrémité en contact avec le liquide alimentaire frais d'un système d'obturation pour éviter l'écoulement sur le sol des résidus de liquide alimentaire se trouvant dans la canne de pompage (20b) lorsque les opérations de transvasement sont terminées et d'un clapet anti-retour pour éviter de polluer un liquide alimentaire frais du conteneur amovible (3, 3b) avec un liquide alimentaire usagé lorsque l'opérateur effectue un complément de liquide alimentaire frais dans son dispositif de cuisson.

Le transbordeur (1) est capable d'embarquer un ou plusieurs système(s) de pompage (2, 2a, 2b) distincts, de manière non limitative, de type manuel ou électrique ou thermique ou pneumatique. Le système de pompage (2) de type manuel est, de manière non limitative, une pompe à palette ou une pompe à membrane ou une pompe siphon. Le système de pompage (2) de type électrique est, de manière non limitative, une pompe à palette ou une pompe à membrane ou une pompe à impulseur flexible ou une pompe péristaltique.

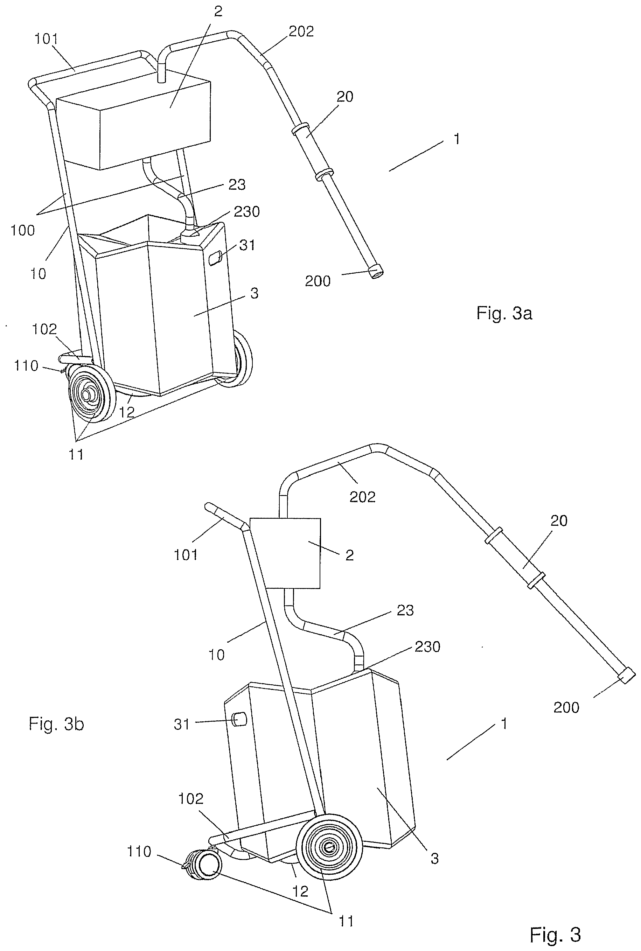

Dans un exemple de réalisation représenté aux figures 1 et 3, le transbordeur (1) est muni d'un système de pompage (2) réversible relié de façon étanche à une canne de pompage (20) par la première conduite (202) et reliable de façon étanche à un conteneur amovible (3) par la deuxième conduite (23).

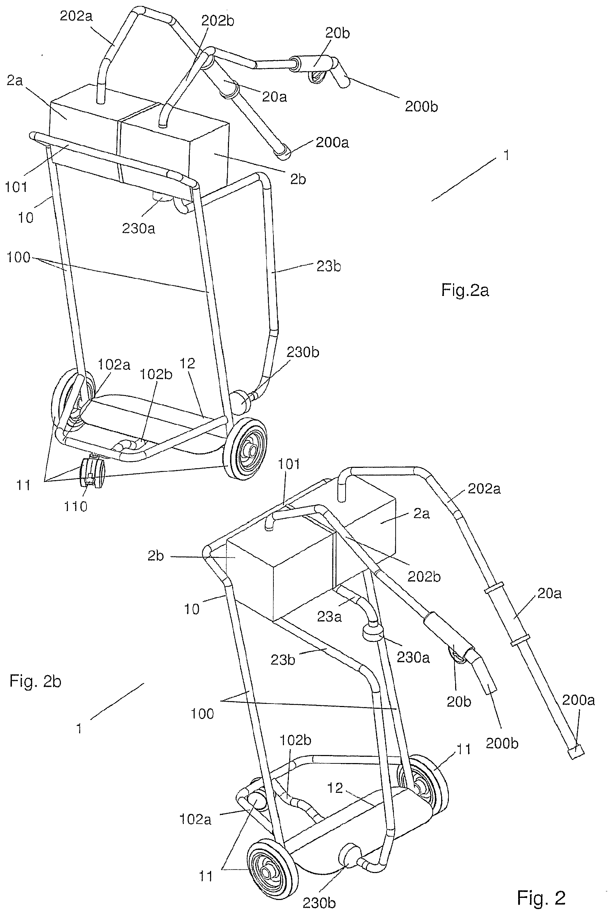

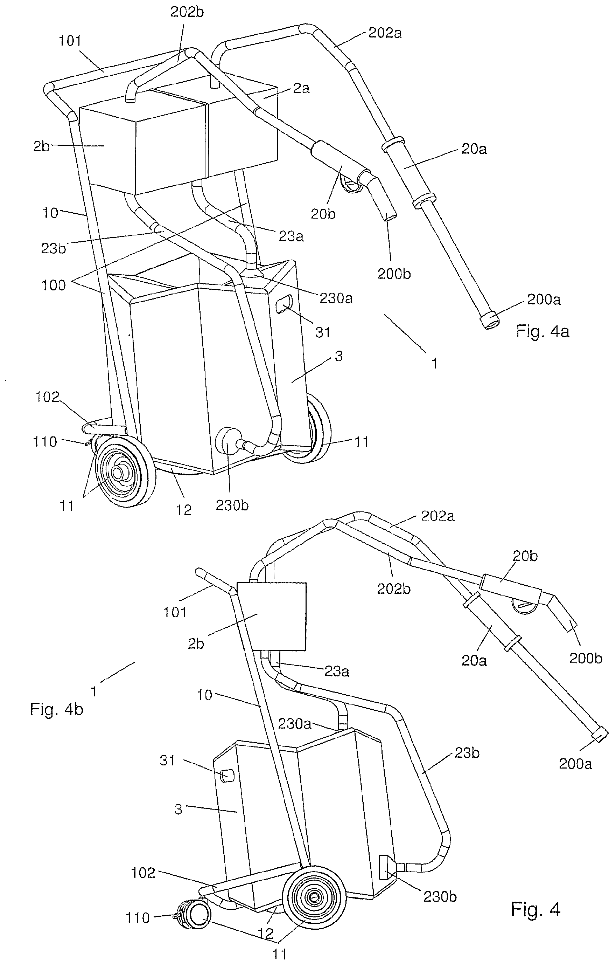

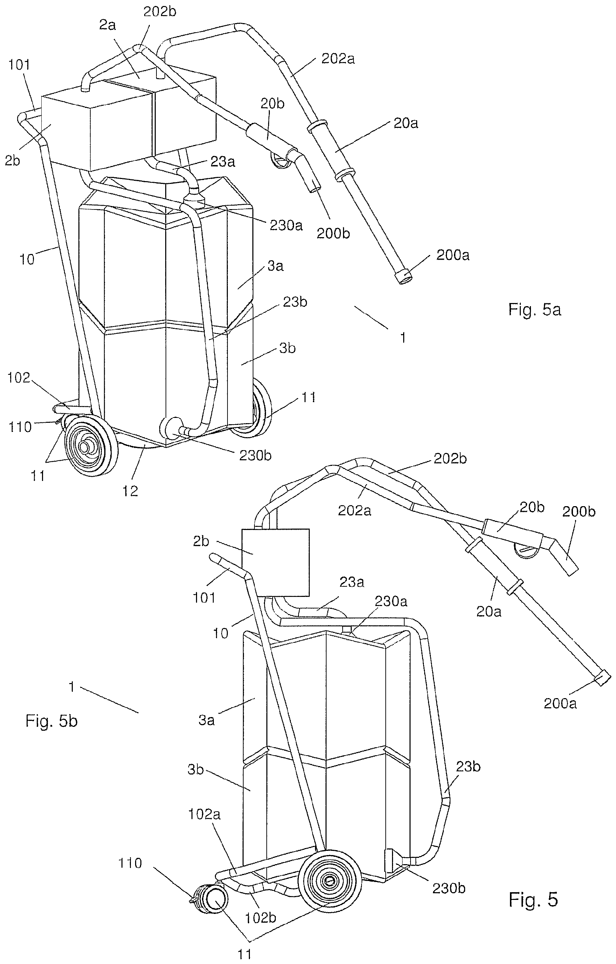

Dans un autre exemple de réalisation représenté aux figures 2, 4 et 5, le transbordeur (1) est équipé de deux systèmes de pompage (2a, 2b) distincts réversibles. Le premier système de pompage (2a) est relié de façon étanche à la canne de pompage (20a) par une première conduite (202a) et reliable de façon étanche à un conteneur amovible (3, 3a) par une deuxième conduite (23a). Le deuxième système de pompage (2b) est relié de façon étanche à une autre canne de pompage (20b) par une autre première conduite (202b) et reliable de façon étanche au même conteneur amovible (3) (configuration représentée à la figure 4) ou à un autre conteneur amovible (3b) (configuration représentée à la figure 5) par une autre deuxième conduite (23b).

Il est à noter que le système de pompage (2b) de liquide alimentaire frais est distinct du système de pompage (2, 2a) de liquide alimentaire usagé.

La présente invention précédemment décrite, permet une ou plusieurs utilisations simples et en toute sécurité du transbordeur (1) coopérant avec un ou plusieurs conteneur(s) amovible(s) (3, 3a, 3b).

Le conteneur amovible (3, 3a, 3b) comprend une structure fermée de forme géométrique caractéristique et de volume prédéterminé, par exemple et de manière non limitative en carton. Au moins une poche est disposée à l'intérieur de ladite structure et est apte à recevoir un liquide alimentaire par au moins un orifice de la poche, ledit orifice de la poche correspondant avec au moins un orifice de la structure et étant apte à recevoir un système de fermeture de la poche. La géométrie et le matériau constitutif de la structure permettent de réaliser le montage par pliage de la structure et l'utilisation par dépliage de la structure afin de réduire l'encombrement de stockage du conteneur et de gerber une pluralité de conteneurs (3, 3a, 3b).

En outre, les conteneurs amovibles (3, 3a, 3b) comportent un système d'accroche des poignées (31) pour faciliter la manutention des conteneurs amovibles (3, 3a, 3b) et également des points de reprise pour éviter tout mouvement du conteneur amovible (3, 3a, 3b) lors de son transport sur le transbordeur (1).

Le ou les conteneur(s) amovible(s) (3, 3a, 3b) sont aptes à recevoir un volume sensiblement inférieur ou égale à 40 litres de liquide alimentaire.

Les conteneurs amovibles (3, 3a, 3b) utilisés avec le transbordeur (1) sont soit des conteneurs amovibles mono-poche, apte à recevoir soit un liquide alimentaire usagé soit un liquide alimentaire frais, soit des conteneurs amovibles bi-poche, dont une première poche est destinée à recevoir un liquide alimentaire frais et l'autre poche est destinée à recevoir un liquide alimentaire usagé. Les poches sont constituées, par exemple et de manière non limitative, de matériau de type plastique.

Le transbordeur (1) muni d'au moins un système de pompage (2, 2a, 2b) est utilisé pour réaliser des opérations de :
- transport d'au moins un conteneur amovible (3, 3a, 3b), selon un premier circuit allant d'un lieu d'utilisation du liquide alimentaire à un lieu de stockage de conteneurs amovibles de liquide alimentaire usagé ou un lieu de stockage de liquide alimentaire usagé, ou selon un deuxième circuit allant du lieu de stockage de conteneurs amovibles de liquide alimentaire usagé ou du lieu de stockage de liquide alimentaire usagé à un lieu de stockage de conteneurs amovibles de liquide alimentaire frais ou un lieu de stockage de liquide alimentaire frais ou selon un troisième circuit allant du lieu de stockage de conteneurs amovibles de liquide alimentaire frais ou du lieu de stockage de liquide alimentaire frais au lieu d'utilisation du liquide alimentaire frais ;
- vidanger, au moyen d'un système de pompage (2, 2a) un liquide alimentaire usagé provenant d'un dispositif de cuisson soit dans un conteneur mono-poche amovible (3) disposé au sol à proximité du dispositif de cuisson ou sur le dispositif de maintien (12) ou le dispositif de maintien (12) et suspension (13) du transbordeur (1) soit dans une première poche d'un conteneur bi-poche amovible (3) disposé au sol à proximité du dispositif de cuisson ou sur le dispositif de maintien (12) ou le dispositif de maintien (12) et suspension (13) du transbordeur (1) soit dans un premier conteneur amovible (3a), empilé sur un deuxième conteneur amovible (3b), disposé sur le dispositif de maintien (12) du transbordeur (1) ;
- dans le cas du transport au lieu de stockage du liquide alimentaire usagé, remplir, au moyen du même système de pompage (2, 2a), un dispositif de stockage de liquide alimentaire usagé avec le liquide alimentaire usagé provenant desdits conteneurs amovibles (3, 3a) ;
- remplir, au moyen d'un autre système de pompage (2b), dans le cas où le transbordeur (1) est muni de deux systèmes de pompage (2a, 2b), un dispositif de cuisson avec un liquide alimentaire frais provenant soit d'un conteneur mono-poche amovible (3) disposé au sol à proximité du dispositif de cuisson ou sur le dispositif de maintien (12) ou le dispositif de maintien (12) et suspension (13) du transbordeur (1) soit d'une deuxième poche d'un conteneur bi-poche amovible (3) disposé au sol à proximité du dispositif de cuisson ou sur le dispositif de maintien (12) ou le dispositif de maintien (12) et suspension (13) du transbordeur (1) soit d'un deuxième conteneur amovible (3b) sur lequel est empilé le premier conteneur amovible (3a) et disposé sur le dispositif de maintien (12) du transbordeur (1) ;
- dans le cas du transport au lieu de stockage du liquide alimentaire frais, vidanger, au moyen de l'autre système de pompage (2b), le liquide alimentaire frais provenant d'un dispositif de stockage de liquide alimentaire frais soit dans un conteneur mono-poche amovible (3) soit dans la deuxième poche du conteneur bi-poche amovible (3) soit dans le deuxième conteneur amovible (3b).

En référence à la figure 3, nous allons décrire à présent un premier exemple d'utilisation d'un transbordeur (1) muni d'un unique système de pompage (2) coopérant avec un conteneur amovible (3). Le transbordeur (1) muni d'un unique système de pompage (2) coopérant avec un conteneur amovible (3) est utilisé pour vidanger, au moyen du système de pompage (2), un liquide alimentaire usagé provenant d'un dispositif de cuisson vers le conteneur amovible (3) disposé au sol à proximité du dispositif de cuisson ou sur le dispositif de maintien (12) du transbordeur (1) puis transporter le conteneur amovible (3) du lieu d'utilisation du liquide alimentaire au lieu de stockage des conteneurs amovibles ou au lieu de stockage du liquide alimentaire usagé et, dans le cas du transport au lieu de stockage du liquide alimentaire usagé, remplir, au moyen du même système de pompage (2), un dispositif de stockage de liquide alimentaire usagé avec le liquide alimentaire usagé du conteneur amovible (3), dans le cas du transport au lieu de stockage de conteneurs amovibles de liquide alimentaire usagé, décharger, au moyen du transbordeur (1), le conteneur amovible (3) pour le disposer au sol.

Les opérations de chargement et déchargement d'un conteneur amovible (3) au moyen du transbordeur (1) selon l'invention seront décrites dans la suite de la description.

En référence à la figure 4, nous allons décrire à présent un deuxième exemple d'utilisation d'un transbordeur (1) muni de deux systèmes de pompage (2a, 2b) coopérant avec un conteneur amovible bi-poche (3). Le transbordeur (1) muni de deux systèmes de pompage (2a, 2b) coopérant avec un conteneur amovible bi-poche (3) est utilisé pour vidanger, au moyen du premier système de pompage (2a), un liquide alimentaire usagé provenant d'un dispositif de cuisson vers la première poche du conteneur amovible (3) disposé au sol à proximité du dispositif de cuisson ou sur le dispositif de maintien (12) du transbordeur (1) puis transporter le conteneur amovible (3) du lieu d'utilisation du liquide alimentaire au lieu de stockage des conteneurs amovibles ou au lieu de stockage du liquide alimentaire usagé et, dans le cas du transport au lieu de stockage du liquide alimentaire usagé, remplir, au moyen du même premier système de pompage (2a), un dispositif de stockage de liquide alimentaire usagé avec le liquide alimentaire usagé du conteneur amovible (3), dans le cas du transport au lieu de stockage de conteneurs amovibles de liquide alimentaire usagé, décharger, au moyen du transbordeur (1), le conteneur amovible (3) pour le disposer au sol.

Dans le cas où le liquide alimentaire usagé du conteneur amovible (3) est transvasé dans le dispositif de stockage de liquide alimentaire usagé, le transbordeur (1), selon le deuxième exemple de réalisation, est utilisé pour transporter le conteneur amovible (3) du lieu de stockage de liquide alimentaire usagé au lieu de stockage de liquide alimentaire frais puis vidanger au moyen du deuxième système de pompage (2b), le liquide alimentaire frais provenant d'un dispositif de stockage de liquide alimentaire frais dans la deuxième poche du conteneur bi-poche amovible (3) et transporter le conteneur amovible bi-poche (3) du lieu de stockage de liquide alimentaire frais au lieu d'utilisation du liquide alimentaire et remplir, au moyen du deuxième système de pompage (2b), un dispositif de cuisson avec un liquide alimentaire frais provenant de la deuxième poche du conteneur bi-poche amovible (3) disposé au sol à proximité du dispositif de cuisson ou sur le dispositif de maintien (12) ou le dispositif de maintien (12) et suspension (13) du transbordeur (1).

En référence aux figures 5, nous allons décrire à présent un troisième exemple d'utilisation d'un transbordeur (1) muni de deux systèmes de pompage (2a, 2b) distincts et coopérant avec deux conteneurs amovibles (3a, 3b) bi-poche ou mono-poche empilés l'un sur l'autre. Le transbordeur (1) muni de deux systèmes de pompage (2a, 2b) distincts et coopérant avec deux conteneurs amovibles (3a, 3b) bi-poche ou mono-poche empilés l'un sur l'autre est utilisé pour vidanger, au moyen du premier système de pompage (2a), un liquide alimentaire usagé provenant d'un dispositif de cuisson vers le premier conteneur amovible (3a) disposé sur le dispositif de maintien (12) du transbordeur (1) puis remplir, au moyen du deuxième système de pompage (2b), le dispositif de cuisson avec du liquide alimentaire frais provenant du deuxième conteneur amovible (3b) puis transporter les conteneurs amovibles (3a, 3b) du lieu d'utilisation du liquide alimentaire au lieu de stockage des conteneurs amovibles ou au lieu de stockage du liquide alimentaire usagé et, dans le cas du transport au lieu de stockage du liquide alimentaire usagé, remplir, au moyen du même premier système de pompage (2a), un dispositif de stockage de liquide alimentaire usagé avec le liquide alimentaire usagé du premier conteneur amovible (3a) et, dans le cas du transport au lieu de stockage de conteneurs amovibles de liquide alimentaire usagé, décharger, au moyen du transbordeur (1), le premier conteneur amovible (3a) pour le disposer au sol.

Il est à noter que pour réaliser des opérations de transvasement de liquide alimentaire frais ou usagé, un opérateur connecte une extrémité de la deuxième conduite (23, 23a, 23b) dont l'autre extrémité est reliée au système de pompage correspondant (2, 2a, 2b) à l'orifice de remplissage ou de vidange du conteneur amovible (3, 3a, 3b) puis plonge l'extrémité (200, 200a, 200b) de la canne de pompage correspondante (2, 2a, 2b) dans le dispositif de cuisson ou dans le dispositif de stockage de liquide alimentaire usagé ou encore dans le dispositif de stockage de liquide alimentaire frais en fonction de l'opération à réaliser, et actionne le système de pompage correspondant (2, 2a, 2b), dans le sens souhaité.

Pour des raisons de sécurité et de législation, dans le cas d'une opération de vidange d'un liquide alimentaire usagé provenant du dispositif de cuisson dans le conteneur amovible (3, 3a), il est nécessaire d'attendre le refroidissement du liquide alimentaire usagé après cuisson avant de réaliser cette opération de vidange. L'opérateur peut obtenir une information de la température du liquide alimentaire usagé au moyen du système de mesure de température prévu à l'extrémité de la canne de pompage (2, 2a) en contact avec le liquide alimentaire usagé et juger de la possibilité d'effectuer ou non cette opération de vidange.

Si l'opérateur ne respecte pas la température de vidange réglementée, le système de sécurité thermique prévue à l'extrémité de la canne de pompage (2, 2a) en contact avec le liquide alimentaire usagé est actionné de façon à bloquer l'opération de vidange.

Le transbordeur (1) muni d'au moins un système de pompage (2) et d'une plaque support (12) destinée à recevoir au moins un conteneur amovible (3) est apte, par un basculement du transbordeur (1), à charger un conteneur amovible (3) se situant au sol sur le transbordeur (1) et à décharger le conteneur amovible (3) du transbordeur (1) pour l'amener au sol sans avoir à se baisser.

Le transbordeur (1) muni d'au moins un système de pompage (2) et du dispositif de suspension (13), décrit précédemment, permet à un opérateur de charger un conteneur amovible (3) se situant au sol sur le transbordeur (1) et de décharger le conteneur amovible (3) du transbordeur (1) pour l'amener au sol sans avoir à se baisser.

Le chargement du conteneur amovible (3) se situant au sol, comme illustré à la figure 7a, sur le transbordeur (1) consiste à amener le conteneur amovible (3) sur la partie inférieure (102) de la structure (10) du transbordeur (1) en disposant le transbordeur (1) à proximité du conteneur (3) disposé au sol, puis en inclinant le transbordeur (1) au moyen de la partie supérieure (101) de la structure (10), comme illustré à la figure 7b, de façon à ce que le système de griffes (130) du dispositif de suspension (13) vienne s'insérer dans des poignées (31) ou un système d'accroche prévu sur le conteneur amovible (3), comme illustré à la figure 6b, et en redressant le transbordeur (1), comme illustré à la figure 7c, de façon à ce que le système de roues (11) revienne en contact avec le sol. Le conteneur amovible (3) peut ensuite être transporté jusqu'au lieu de stockage des conteneurs amovibles (3) ou au lieu de stockage du liquide alimentaire usagé, ou utiliser pour réaliser les opérations de transvasement.

Le déchargement du conteneur amovible (3) du transbordeur (1) au sol consiste à incliner le transbordeur (1) au moyen de la partie supérieure (101) de la structure (10) de façon à ce que le conteneur amovible (3) soit déposé au sol et décrocher le système de griffes (130) des poignées (31) ou du système d'accroche prévu sur le conteneur amovible (3) puis redresser le transbordeur (1) de façon à ce que le système de roues (11) revienne en contact avec le sol.

De façon avantageuse, le transbordeur (1) muni du dispositif de suspension (13) permet de faciliter l'ergonomie et la manutention du conteneur amovible (3).

Un des avantages de l'invention est que le transbordeur (1) muni d'au moins un système de pompage (2, 2a, 2b) permet d'assurer simplement et en toute sécurité la réalisation d'opération de transport d'au moins un conteneur amovible (3, 3a, 3b), de transvasement de liquide alimentaire frais au moyen d'un système de pompage (2b) et/ou de transvasement de liquide alimentaire usagé au moyen d'un autre système de pompage (2, 2a) mais également de chargement et déchargement d'un conteneur amovible (3, 3a, 3b).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Transbordeur (1) comprenant au moins un système de pompage (2, 2a, 2b) ledit transbordeur (1) comprenant une structure mécanique (10) équipée de roues (11), une canne de pompage (20, 20a, 20b), une première conduite (202, 202a, 202b) et une deuxième conduite (23, 23a, 23b), soit un dispositif de maintien (12) destiné à recevoir et maintenir au moins un conteneur amovible (3, 3a, 3b) soit un dispositif de suspension (13) de conteneur amovible destiné à charger et décharger un conteneur amovible (3) sur le dispositif de maintien (12), la partie supérieure (101) de ladite structure (10) permettant à un opérateur de manoeuvrer ledit transbordeur (1) pour transporter le ou les conteneur(s) amovible(s) (3, 3a, 3b) ; et chaque système de pompage (2, 2a, 2b) étant fixé à la structure (10), à proximité de la partie supérieure (101) de la structure (10) et à distance dudit ou desdits conteneur(s) amovible(s), relié de façon étanche à ladite canne de pompage (20, 20a, 20b) par ladite première conduite (202, 202a, 202b) et reliable de façon étanche mais montable et démontable au conteneur amovible (3, 3a, 3b) à ladite deuxième conduite (23, 23a, 23b), l'extrémité de la deuxième conduite (23,23a, 23b) étant munie d'un système de connexion rapide anti-débordement (230, 230a, 230b) apte à être mis en contact avec un orifice de remplissage ou de vidange du conteneur amovible (3, 3a, 3b), ledit système de connexion rapide anti-débordement (230, 230a, 230b) étant composé en outre de clapets d'obturation aseptiques fournissant une étanchéité et d'un système de sécurité permettant d'éviter des déconnexions accidentelles entre la deuxième conduite (23,23a, 23b) et l'orifice de remplissage ou de vidange du conteneur amovible (3, 3a, 3b), ledit système de connexion rapide anti-débordement (230, 230a, 230b) étant configuré pour réaliser des opérations de transvasement de liquide alimentaire.

2. Transbordeur (1) selon la revendication 1, **caractérisé en ce que** le dispositif de maintien (12) d'au moins un conteneur amovible (3, 3a, 3b) est une plaque support (12) montée fixement à la partie inférieure (102) de la structure (10) du transbordeur (1) et le dispositif de suspension (13) d'un conteneur amovible (3) est monté fixement à la partie supérieure (101) de la structure (10) du transbordeur (1) et constitué d'un système de griffes (130) destiné à s'insérer dans un système d'accroche prévu sur le conteneur amovible (3) pour charger et décharger le conteneur amovible (3) pour le poser ou respectivement l'enlever du dispositif de maintien (12) associé.

3. Transbordeur (1) selon la revendication 1 ou 2, **caractérisé en ce que** le système de pompage (2, 2a, 2b) est réversible, de type manuel ou électrique ou thermique ou pneumatique, le système de pompage (2b) de liquide alimentaire frais étant distinct du système de pompage (2, 2a) de liquide alimentaire usagé.

4. Transbordeur (1) selon une des revendications 1 à 3, **caractérisé en ce que** la canne de pompage (20, 20a) d'un système de pompage (2, 2a) destiné à transvaser un liquide alimentaire usagé d'un dispositif de cuisson dans le conteneur amovible (3, 3a) est équipée à son extrémité en contact avec le liquide alimentaire usagé :
- d'un système de sécurité thermique pour empêcher la réalisation des opérations de transvasement de liquide alimentaire usagé du dispositif de cuisson vers le conteneur amovible (3, 3a), au-dessus d'un seuil réglementé de température du liquide alimentaire usagé ; et/ou
- d'un système de mesure de température pour fournir une information représentative de la température du liquide alimentaire du dispositif de cuisson à un opérateur, au moyen d'un dispositif d'affichage ; et/ou
- d'un système de filtrage pour éviter l'introduction de déchets solides indésirables dans le conteneur amovible (3, 3a) et venant ou non du dispositif de cuisson ; et/ou
- d'un système d'obturation pour éviter l'écoulement sur le sol des résidus de liquide alimentaire se trouvant dans la canne de pompage (20, 20a) lorsque les opérations de transvasement sont terminées.

5. Transbordeur (1) selon la revendication 4, **caractérisé en ce que** le système de mesure de température est à contact direct ou non et le système de filtrage est réglé en fonction de la granulométrie des déchets solides acceptés dans le liquide alimentaire usagé à vidanger.

6. Transbordeur (1) selon une des revendications 1 à 3, **caractérisé en ce que** la canne de pompage (20b) d'un système de pompage (2b) destiné à transvaser un liquide alimentaire frais provenant d'un conteneur amovible (3, 3b) dans un dispositif de cuisson est équipée à son extrémité en contact avec le liquide alimentaire frais :
- d'un système d'obturation pour éviter l'écoulement sur le sol des résidus de liquide alimentaire se trouvant dans la canne de pompage (20b) lorsque les opérations de transvasement sont terminées ; et/ou
- d'un clapet anti-retour pour éviter de polluer un liquide alimentaire frais du conteneur amovible (3, 3b) avec un liquide alimentaire usagé lorsque l'opérateur effectue un complément de liquide alimentaire frais dans son dispositif de cuisson.

7. Transbordeur (1) selon une des revendications 1 à 6, **caractérisé en ce que** la première conduite (202, 202a, 202b) est flexible et la deuxième conduite (23, 23a, 23b) est rigide ou flexible et est munie ou non d'un système de connexion rapide anti-débordement (230, 230a, 230b) à l'extrémité en contact avec un orifice de remplissage ou de vidange du conteneur amovible (3, 3a, 3b).

8. Transbordeur (1) selon une des revendications 1 à 7, **caractérisé en ce que** la structure (10) du transbordeur (1) est prévue pour être démontable ou pliable pour réduire l'encombrement et faciliter le rangement du transbordeur (1) lorsqu'il n'y a pas lieu de l'utiliser.

9. Utilisation du transbordeur (1) selon une des revendications 1 à 8, **caractérisée en ce que** le transbordeur (1) muni d'au moins un système de pompage (2, 2a, 2b) coopérant avec au moins un conteneur amovible (3, 3a, 3b) est utilisé pour :
- transporter au moins un conteneur amovible (3, 3a, 3b), entre un lieu de stockage de conteneurs amovibles de liquide alimentaire usagé, un lieu de stockage de conteneurs amovibles de liquide alimentaire frais, un lieu de stockage de liquide alimentaire usagé et un lieu de stockage de liquide alimentaire frais ;
- vidanger, au moyen d'un système de pompage (2, 2a) un liquide alimentaire usagé provenant d'un dispositif de cuisson dans un conteneur amovible (3) ou une poche d'un conteneur bi-poche amovible ;
- dans le cas du transport au lieu de stockage du liquide alimentaire usagé, remplir, au moyen du même système de pompage (2, 2a), un dispositif de stockage de liquide alimentaire usagé avec le liquide alimentaire usagé provenant desdits conteneurs amovibles (3, 3a) ;
- remplir, au moyen d'un autre système de pompage (2b), dans le cas où le transbordeur (1) est muni au moins de deux systèmes de pompage (2a, 2b), un dispositif de cuisson avec un liquide alimentaire frais provenant d'un autre conteneur amovible (3) ou d'une autre poche du conteneur bi-poche amovible ;
- dans le cas du transport au lieu de stockage du liquide alimentaire frais, vidanger, au moyen de l'autre système de pompage (2b), le liquide alimentaire frais provenant d'un dispositif de stockage de liquide alimentaire frais soit dans le conteneur amovible (3) ou dans la deuxième poche du conteneur bi-poche amovible (3).

10. Utilisation du transbordeur (1) selon la revendication 9, **caractérisée en ce que** pour réaliser des opérations de transvasement de liquide alimentaire frais ou usagé, un opérateur connecte une extrémité de la deuxième conduite (23, 23a, 23b) dont l'autre extrémité est reliée au système de pompage correspondant (2, 2a, 2b) à l'orifice de remplissage ou de vidange du conteneur amovible (3, 3a, 3b) puis plonge l'extrémité (200, 200a, 200b) de la canne de pompage correspondante (2, 2a, 2b) dans le dispositif de cuisson ou dans le dispositif de stockage de liquide alimentaire usagé ou encore dans le dispositif de stockage de liquide alimentaire frais en fonction de l'opération à réaliser, et actionne le système de pompage correspondant (2, 2a, 2b), dans le sens souhaité.

11. Utilisation du transbordeur (1) selon la revendication 9 ou 10, **caractérisée en ce que** le transbordeur (1) muni d'au moins un système de pompage (2) et d'une plaque support (12) destinée à recevoir au moins un conteneur amovible (3) est apte, par un basculement du transbordeur (1), à charger un conteneur amovible (3) se situant au sol sur le transbordeur (1) et à décharger le conteneur amovible (3) du transbordeur (1) pour l'amener au sol sans avoir à se baisser.

12. Utilisation du transbordeur (1) selon une des revendications 9 à 11, **caractérisée en ce que** le transbordeur (1) muni d'au moins un système de pompage (2) et du dispositif de suspension (13) permet à un opérateur de charger un conteneur amovible (3) se situant au sol sur le transbordeur (1) et de décharger le conteneur amovible (3) du transbordeur (1) pour l'amener au sol sans avoir à se baisser.

13. Utilisation du transbordeur (1) selon la revendication 12, **caractérisée en ce que** le chargement du conteneur amovible (3) se situant au sol sur le transbordeur (1) consiste à amener le conteneur amovible (3) sur la partie inférieure (102) de la structure (10) du transbordeur (1) en disposant le transbordeur (1) à proximité du conteneur (3) disposé au sol, puis en inclinant le transbordeur (1) au moyen de la partie supérieure (101) de la structure (10) de façon à ce que le système de griffes (130) du dispositif de suspension (13) vienne s'insérer dans un système d'accroche prévu sur le conteneur amovible (3) et en redressant le transbordeur (1) de façon à ce que le système de roues (11) revienne en contact avec le sol.

14. Utilisation du transbordeur (1) selon la revendication 12, **caractérisée en ce que** le déchargement du conteneur amovible (3) du transbordeur (1) au sol consiste à incliner le transbordeur (1) au moyen de la partie supérieure (101) de la structure (10) de façon à ce que le conteneur amovible (3) soit déposé au sol et décrocher le système de griffes (130) du système d'accroche prévu sur le conteneur amovible (3) puis redresser le transbordeur (1) de façon à ce que le système de roues (11) revienne en contact avec le sol.

## Patentansprüche

1. *Transporteinrichtung (1), mit mindestens einem Pumpsystem (2, 2a, 2b), wobei das Übertragungs-Förderband aufweist: eine mechanische Struktur (10), die mit Rädern (11) ausgestattet ist, ein Pumprohr (20, 20a, 20b), eine erste Leitung (202, 202a, 202b) und eine zweite Leitung (23, 23a, 23b), entweder eine Haltevorrichtung (12), zum Aufnehmen und Halten von mindestens einem entfernbaren Behälter (3, 3a, 3b) oder eine Aufhängevorrichtung (13) für entfernbare Behälter zum Be- und Entladen eines entfernbaren Behälters (3) auf der Haltevorrichtung (12), wobei der obere Abschnitt (101) der Struktur (10) einer Bedienperson ermöglicht, die Transporteinrichtung (1) zu betätigen, um den oder die entfernbaren Behälter (3, 3a, 3b) zu transportieren, und wobei jedes Pumpsystem (2, 2a, 2b) an der Struktur (10) in der Nähe des oberen Abschnitts (101) der Struktur (10) und mit Abstand von dem oder den entfernbaren Behältern befestigt ist, und durch die erste Leitung (202, 202a, 202b) auf dichte Weise mit dem Pumprohr (20, 20a, 20b) verbunden ist, und durch die zweite Leitung (23, 23a, 23b) auf dichte aber montierbare und demontierbare Weise mit dem entfernbaren Behälter (3, 3a, 3b) verbindbar ist, wobei das Ende der zweiten Leitung (23, 23a, 23b) ein Anti-Überlauf-Schnellverbindungs-System (230, 230a, 230b) aufweist, das mit einer Öffnung zum Füllen oder Entleeren des entfernbaren Behälters (3, 3a, 3b) in Kontakt gebracht werden kann, wobei das Anti-Überlauf-Schnellverbindungs-System (230, 230a, 230b) zudem aus aseptischen Verschlussventilen, die eine Abdichtung herstellen, und einem Sicherheitssystem zum Vermeiden von unbeabsichtigten Entkuppeln zwischen der zweiten Leitung (23, 23a, 23b) und der Öffnung zum Füllen oder Entleeren des entfernbaren Behälters (3, 3a, 3b) besteht, wobei das Anti-Überlauf-Schnellverbindungs-System (230, 230a, 230b) konfiguriert ist, um Vorgänge zum Umfüllen eines flüssigen Nahrungsmittels durchzuführen.*

2. *Transporteinrichtung (1) nach Anspruch 1, **dadurch gekennzeichnet, dass** die Haltevorrichtung (12) von wenigstens einem entfernbaren Behälter (3, 3a, 3b) eine an dem unteren Abschnitt (102) der Struktur (10) der Transporteinrichtung (1) fest montierte Trägerplatte (12) ist und die Aufhängevorrichtung (13) eines entfernbaren Behälters (3) an dem oberen Abschnitt (101) der Struktur (10) der Transporteinrichtung (1) fest montiert ist und mit einem Greifsystem (130) vorgesehen ist, das bestimmt ist, in ein auf dem entfernbaren Behälter (3) vorgesehenes Befestigungssystem zum Be- und Entladen des entfernbaren Behälters (3) eingesetzt zu werden, um ihn auf die zugeordnete Haltevorrichtung (12) zu stellen beziehungsweise ihn von der zugeordneten Haltevorrichtung (12) zu entnehmen.*

3. *Transporteinrichtung (1) nach einem der Ansprüche 1 oder 2, **dadurch gekennzeichnet, dass** das Pumpsystem (2, 2a, 2b) umkehrbar ist, vom manuellen oder elektrischen oder Wärme- oder pneumatischen Typ ist, wobei sich das System zum Pumpen (2b) von frischen flüssigen Nahrungsmitteln von dem System zum Pumpen (2, 2a) von gebrauchten flüssigen Nahrungsmitten unterscheidet.*

4. *Transporteinrichtung (1) nach einem der Ansprüche 1 bis 3, **dadurch gekennzeichnet, dass** das Pumprohr (20, 20a) eines Pumpsystems (2, 2a), das zum Umfüllen eines gebrauchten flüssigen Nahrungsmittels aus einer Kochvorrichtung in den entfernbaren Behälter (3, 3a) an seinem Ende, das mit dem gebrauchten flüssigen Nahrungsmittel in Kontakt ist, ausgestattet ist mit:*
- *einem thermischen Sicherheitssystem zum Verhindern der Durchführung der Vorgänge zum Umfüllen eines gebrauchten flüssigen Nahrungsmittels aus der Kochvorrichtung in den entfernbaren Behälter (3, 3a) über einer festgelegten Temperaturschwelle des gebrauchten flüssigen Nahrungsmittels, und*/*oder*
- *einem System zur Temperaturmessung, um eine Information, die für die Temperatur des flüssigen Nahrungsmittels der Kochvorrichtung repräsentativ ist, einer Bedienperson mittels einer Anzeigevorrichtung bereitzustellen, und*/*oder*
- *einem Filtersystem, um das Einbringen von unerwünschten festen Abfallstoffen in den entfernbaren Behälter (3, 3a) zu verhindern, die aus der Kochvorrichtung stammen oder nicht, und*/*oder*
- *einem Verschlusssystem, um das Ausströmen der sich in dem Pumprohr (20, 20a) befindenden flüssigen Nahrungsmittelreste auf den Boden zu verhindern, wenn die Umfüllvorgänge beendet sind.*

5. *Transporteinrichtung (1) nach Anspruch 4, **dadurch gekennzeichnet, dass** das Temperatur-Mess-System mit oder ohne direkten Kontakt ist und dass das Filtersystem in Abhängigkeit von der Korngrößenbestimmung der festen Abfallstoffe, die in dem zu entleerenden gebrauchten flüssigen Nahrungsmittel akzeptiert sind, geregelt wird.*

6. *Transporteinrichtung (1) nach einem der Ansprüche 1 bis 3, **dadurch gekennzeichnet, dass** das Pumprohr (20b) eines Pumpsystems (2b), das zum Umfüllen eines aus einem entfernbaren Behälter (3, 3b) stammenden frischen flüssigen Nahrungsmittels in eine Kochvorrichtung vorgesehen ist, an seinem Ende, das mit dem frischen flüssigen Nahrungsmittel in Kontakt ist, ausgestattet ist mit:*
- *einem Verschlusssystem, um das Ausströmen der sich in dem Pumprohr (20b) befindenden flüssigen Nahrungsmittelreste auf den Boden zu verhindern, wenn die Umfüllvorgänge beendet sind, und*/*oder*
- *einem Rückschlagventil, um ein Verunreinigen eines frischen flüssigen Nahrungsmittels des entfernbaren Behälters (3, 3b) mit einem gebrauchten flüssigen Nahrungsmittel zu verhindern, wenn die Bedienperson ein Zugeben eines frischen flüssigen Nahrungsmittels in ihre Kochvorrichtung durchführt.*

7. *Transporteinrichtung (1) nach einem der Ansprüche 1 bis 6, **dadurch gekennzeichnet dass**, die erste Leitung (202, 202a, 202b) flexibel ist und die zweite Leitung (23, 23a,23b) steif oder flexibel ist und an dem Ende, das mit einer Öffnung zum Füllen oder zum Entleeren des entfernbaren Behälter (3, 3a, 3b) in Kontakt ist, mit einem Anti-Überlauf-Schnellverbindungs-System (230, 230a, 230b) verbunden ist oder nicht.*

8. *Transporteinrichtung (1) nach einem der Ansprüche 1 bis 7, **dadurch gekennzeichnet, dass** die Struktur (10) der Transporteinrichtung (1) demontierbar oder faltbar vorgesehen ist, um den Platzbedarf zu verringern und die Lagerung der Transporteinrichtung (1) zu vereinfachen, wenn sie nicht verwendet wird.*

9. *Verwendung der Transporteinrichtung (1) nach einem der Ansprüche 1 bis 8, **dadurch gekennzeichnet, dass** die mit mindestens einem Pumpsystem (2, 2a, 2b) ausgestattete Transporteinrichtung (1), das mit mindestens einem entfernbaren Behälter (3, 3a, 3b) zusammenwirkt, verwendet wird, um:*
- *den entfernbaren Behälter (3, 3a, 3b) zwischen einem Lagerort der entfernbaren Behälter von gebrauchtem flüssigem Nahrungsmittel, einem Lagerort der entfernbaren Behälter von frischem flüssigem Nahrungsmittel, einem Lagerort des gebrauchten flüssigen Nahrungsmittels und einem Lagerort des frischen flüssigen Nahrungsmittels zu transportieren,*
- *mittels eines Pumpsystems (2, 2a) ein gebrauchtes flüssiges Nahrungsmittel, das aus einer Kochvorrichtung stammt, entweder in einen entfernbaren Behälter (3) oder in eine Tasche eines entfernbaren Zwei-Taschen-Behälters zu entleeren,*
- *in dem Fall des Transports zu dem Lagerort des gebrauchten flüssigen Nahrungsmittels, mittels des gleichen Pumpsystems (2, 2a) eine Vorrichtung zum Lagern von gebrauchtem flüssigem Nahrungsmittel mit dem gebrauchten flüssigem Nahrungsmittel zu befüllen, das aus den genannten entfernbaren Behältern (3, 3a) stammt,*
- *wenn die Transporteinrichtung (1) mindestens zwei Pumpsysteme (2b) aufweist, mittels eines anderen Pumpsystems (2b) eine Kochvorrichtung mit einem frischen Nahrungsmittel zu befüllen, das aus einem anderen entfernbaren Behälter (3) oder aus einer anderen Tasche eines entfernbaren Zwei-Taschen-Behätters stammt,*
- *in dem Fall des Transports zu dem Lagerort des frischen flüssigen Nahrungsmittels, mittels des anderen Pumpsystems (2b) das frische flüssige Nahrungsmittel, das aus einer Vorrichtung zum Lagern eines frischen flüssigen Nahrungsmittel stammt, entweder in den entfernbaren Behälter (3) oder in die zweite Tasche des entfernbaren Zwei-Taschen-Behälters (3) zu entleeren.*

10. *Verwendung der Transporteinrichtung (1) nach Anspruch 9, **dadurch gekennzeichnet, dass** zum Durchführen von Vorgängen des Umfüllens eines frischen oder gebrauchten flüssigen Nahrungsmittels eine Bedienperson ein Ende der zweiten Leitung (23, 23a, 23b), deren anderes Ende mit dem korrespondierenden Pumpsystem (2, 2a, 2b) verbunden ist, mit der Öffnung zum Füllen oder zum Entleeren des entfernbaren Behälters (3, 3a, 3b) verbindet, dann das Ende (200, 200a, 200b) des korrespondierenden Pumprohrs (2, 2a, 2b) in Abhängigkeit von dem durchzuführenden Vorgang in die Kochvorrichtung oder in die Vorrichtung zum Lagern eines gebrauchten flüssigen Nahrungsmittels oder in die Vorrichtung zum Lagern eines frischen flüssigen Nahrungsmittels eintaucht, und das korrespondierende Pumpsystem (2, 2a, 2b) in der gewünschten Richtung betätigt.*

11. *Verwendung der Transporteinrichtung (1) nach einem der Ansprüche 9 oder 10, **dadurch gekennzeichnet, dass** das Übertragungs-Förderband (1) mit mindestens einem Pumpsystem (2) und einer Trägerplatte (12) zum Aufnehmen mindestens eines entfernbaren Behälters (3) durch ein Kippen der Transporteinrichtung (1) einen entfernbaren Behälter (3), der sich auf dem Boden befindet, auf die Transporteinrichtung (1) beladen kann und den entfernbaren Behälter (3) aus der Transporteinrichtung (1) entladen kann, um diesen auf den Boden zu stellen, ohne sich zu bücken.*

12. *Verwendung der Transporteinrichtung (1) nach einem der Ansprüche 9 bis 11, **dadurch gekennzeichnet, dass** die Transporteinrichtung (1) mit mindestens einem Pumpsystem (2) und der Aufhängevorrichtung (13) einer Bedienperson ermöglicht, einen entfernbaren Behälter (3), der sich auf dem Boden befindet, auf die Transporteinrichtung (1) zu beladen und den entfernbaren Behälter (3) aus der Transporteinrichtung (1) zu entladen, um diesen auf den Boden zu stellen, ohne sich zu bücken.*

13. *Verwendung der Transporteinrichtung (1) nach Anspruch 12, **dadurch gekennzeichnet, dass** das Beladen des entfernbaren Behälters (3), der sich auf dem Boden befindet, auf die Transporteinrichtung (1) darin besteht, den entfernbaren Behälter (3) auf den unteren Abschnitt (102) der Struktur (10) der Transporteinrichtung (1) beim Stellen des Übertragungs-Förderbands (1) in der Nähe des entfernbaren Behälters (3), der sich auf dem Boden befindet, dann beim Kippen der Transporteinrichtung (1) mittels des oberen Abschnitts (101) der Struktur (10), sodass das Greifsystem (130) der Aufhängevorrichtung (13) sich in ein auf dem entfernbaren Behälter (3) vorgesehenes Befestigungssystem einsetzt, und beim Aufrichten der Transporteinrichtung (1), sodass das Radsystem (11) wieder im Kontakt mit dem Boden gebracht wird, zu stellen.*

14. *Verwendung der Transporteinrichtung (1) nach Anspruch 12, **dadurch gekennzeichnet, dass** das Entladen des entfernbaren Behälters (3) aus der Transporteinrichtung (1) darin besteht, die Transporteinrichtung (1) mittels des oberen Abschnittes (101) der Struktur (10) zu neigen, sodass der entfernbare Behälter (3) auf den Boden gestellt wird und das Greifsystem (130) aus dem auf dem entfernbaren Behälter (3) vorgesehenen Befestigungssystem ausgehakt wird, dann die Transporteinrichtung (1) aufzurichten, sodass das Radsystem (11) wieder im Kontakt mit dem Boden gebracht wird.*

## Claims

1. Transfer conveyer (1) comprising at least one pumping system (2, 2a, 2b), said transfer conveyer (1) comprising
a mechanical structure (10) equipped with wheels (11), a pumping line (20, 20a, 20b), a first pipe (202, 202a, 202b) and a second pipe (23, 23a, 23b),
either a holding device (12) designed to receive and hold at least one removable container (3, 3a, 3b) or a removable container suspension device (13) designed to load and unload a removable container (3) onto the holding device (12), the upper part (101) of said structure (10) allowing an operator to manoeuvre said transfer conveyer (1) in order to transport the removable container or containers (3, 3a, 3b); and each pumping system (2, 2a, 2b) being fixed to the structure (10), in the proximity of the upper part (101) of the structure (10) and at a distance from said removable container or containers, connected in a sealed manner to said pumping line (20, 20a, 20b) by said first pipe (202, 202a, 202b) and connectable in a sealed manner, but capable of being mounted and dismounted on the removable container (3, 3a, 3b), to said second pipe (23, 23a, 23b), the end of the second pipe (23, 23a, 23b) being provided with an anti-overflow quick-connect system (230, 230a, 230b) capable of being brought into contact with an orifice for filling or emptying of the removable container (3, 3a, 3b), said anti-overflow quick-connect system (230, 230a, 230b) being further composed of aseptic shut-off valves which provide sealing and a safety system making it possible to avoid accidental disconnection between the second pipe (23, 23a, 23b) and the orifice for filling or emptying of the removable container (3, 3a, 3b), said anti-overflow quick-connect system (230, 230a, 230b) being configured to perform liquid food transfer operations.

2. Transfer conveyer (1) according to claim 1, **characterised in that** the device (12) for holding at least one removable container (3, 3a, 3b) is a support plate (12) mounted fixedly on the lower part (102) of the structure (10) of the transfer conveyer (1) and the suspension device (13) for a removable container (3) is mounted fixedly on the upper part (101) of the structure (10) of the transfer conveyer (1) and consists of a system of claws (130) designed to be inserted in a hooking system provided on the removable container (3) in order to load and unload the removable container (3) in order to place it or respectively remove it from the associated holding device (12).

3. Transfer conveyer (1) according to claim 1 or 2, **characterised in that** the pumping system (2, 2a, 2b) is reversible, of the manual or electric or thermal or pneumatic type, the fresh liquid food pumping system (2b) being separate from the used liquid food pumping system (2, 2a).

4. Transfer conveyer (1) according to one of claims 1 to 3, **characterised in that** the pumping line (20, 20a) of a pumping system (2, 2a) designed to transfer a used liquid food from a cooking device to the removable container (3, 3a) is equipped, at its end in contact with the used liquid food, with:
- a thermal safety system to prevent the performance of operations of transfer of used liquid food from the cooking device to the removable container (3, 3a), above a regulated temperature threshold of the used liquid food; and/or
- a temperature measuring system for providing information representing the temperature of the liquid food of the cooking device to an operator, by means of a display device; and/or
- a filter system for avoiding the introduction of undesirable solid waste into the removable container (3, 3a), which may or may not come from the cooking device; and/or
- a shut-off system to prevent liquid food residues located in the pumping line (20, 20a) from flowing onto the floor when the transfer operations are complete.

5. Transfer conveyer (1) according to claim 4, **characterised in that** the temperature measuring system may or may not be in direct contact and the filter system is regulated as a function of the particle size of solid waste accepted in the used liquid food to be emptied.

6. Transfer conveyer (1) according to one of claims 1 to 3, **characterised in that** the pumping line (20b) of a pumping system (2b) designed to transfer a fresh liquid food from a removable container (3, 3b) to a cooking device is equipped, at its end in contact with the fresh liquid food, with:
- a shut-off system to prevent liquid food residues located in the pumping line (20, 20a) from flowing onto the floor when the transfer operations are complete; and/or
- a non-return valve to avoid polluting a fresh liquid food of the removable container (3, 3b) with a used liquid food when the operator performs addition of fresh liquid food to his cooking device.

7. Transfer conveyer (1) according to one of claims 1 to 6, **characterised in that** the first pipe (202, 202a, 202b) is flexible and the second pipe (23, 23a, 23b) is rigid or flexible and may or may not be provided with an anti-overflow quick-connect system (230, 230a, 230b) at the end in contact with an orifice for filling or emptying of the removable container (3, 3a, 3b).

8. Transfer conveyer (1) according to one of claims 1 to 7, **characterised in that** the structure (10) of the transfer conveyer (1) is provided to be dismountable or foldable in order to reduce the overall dimensions and facilitate storage of the transfer conveyer (1) when there is no occasion to use it.

9. Use of the transfer conveyer (1) according to one of claims 1 to 8, **characterised in that** the transfer conveyer (1) provided with at least one pumping system (2, 2a, 2b) cooperating with at least one removable container (3, 3a, 3b) is used for:
- transporting at least one removable container (3, 3a, 3b) between a place for storing removable containers for used liquid food, a place for storing removable containers for fresh liquid food, a place for storing used liquid food and a place for storing fresh liquid food;
- emptying, by means of a pumping system (2, 2a), a used liquid food from a cooking device into a removable container (3) or a compartment of a removable two-compartment container;
- in the case of transport to the place for storing used liquid food, filling, by means of the same pumping system (2, 2a), a device for storing used liquid food with the used liquid food from said removable containers (3, 3a);
- filling, by means of another pumping system (2b), in the event that the transfer conveyer (1) is provided with at least two pumping systems (2a, 2b), a cooking device with a fresh liquid food from another removable container (3) or from another compartment of the removable two-compartment container;
- in case of transport to the place of storage of the fresh liquid food, emptying, by means of the other pumping system (2b), the fresh liquid food from a fresh liquid food storage device, that is, into the removable container (3) or into the second compartment of the removable two-compartment container (3).

10. Use of the transfer conveyer (1) according to claim 9, **characterised in that**, in order to perform operations of transfer of fresh or used liquid food, an operator connects one end of the second pipe (23, 23a, 23b) of which the other end is connected to the corresponding pumping system (2, 2a, 2b) to the orifice for filling or emptying of the removable container (3, 3a, 3b), then immerses the end (200, 200a, 200b) of the corresponding pumping line (2, 2a, 2b) in the cooking device or in the used liquid food storage device or else in the fresh liquid food storage device, depending on the operation to be performed, and actuates the corresponding pumping system (2, 2a, 2b) in the desired direction.

11. Use of the transfer conveyer (1) according to claim 9 or 10, **characterised in that** the transfer conveyer (1) provided with at least one pumping system (2) and a support plate (12) designed to receive at least one removable container (3) is capable, by tilting of the transfer conveyer (1), of loading a removable container (3) situated on the floor, onto the transfer conveyer (1), and unloading the removable container (3) from the transfer conveyer (1) in order to put it on the floor without having to bend down.

12. Use of the transfer conveyer (1) according to one of claims 9 to 11, **characterised in that** the transfer conveyer (1) provided with at least one pumping system (2) and the suspension device (13) allows an operator to load a removable container (3) situated on the floor, onto the transfer conveyer (1), and unloading the removable container (3) from the transfer conveyer (1) in order to put it on the floor without having to bend down.

13. Use of the transfer conveyer (1) according to claim 12, **characterised in that** loading of the removable container (3) situated on the floor onto the transfer conveyer (1) consists of putting the removable container (3) on the lower part (102) of the structure (10) of the transfer conveyer (1) while placing the transfer conveyer (1) in the proximity of the container (3) placed on the floor, then tilting the transfer conveyer (1) by means of the upper part (101) of the structure (10) so that the system of claws (130) of the suspension device (13) is inserted in a hooking system provided on the removable container (3), and setting the transfer conveyer (1) back upright so that the system of wheels (11) comes into contact with the floor again.

14. Use of the transfer conveyer (1) according to claim 12, **characterised in that** unloading of the removable container (3) from the transfer conveyer (1) to the floor consists of tilting the transfer conveyer (1) by means of the upper part (101) of the structure (10) so that the removable container (3) is deposited on the floor, and unhooking the system of claws (130) from the hooking system provided on the removable container (3), then setting the transfer conveyer (1) back upright so that the system of wheels (11) comes into contact with the floor again.
